# EUROPEAN PATENT APPLICATION

(11) **EP 4 825 161 A1**
(43) Date of publication of application: **21.10.2026**
(21) Application number: 25171374.9
(22) Date of filing: 17.04.2025
(51) Int. Cl.: A01G 23/08, E02F 3/36, G01D 11/24

(54) **HARVESTER HEAD ROTATOR WITH ROTATION ANGLE SENSOR**

(71) Applicant: Deere & Company, Moline, IL 61265 (US)
(72) Inventor: Solala, Aki, Mannheim (DE)
(74) Representative: Holst, Sönke

(57) **Abstract**

An assembly comprises a rotator (30) for a harvester head (20), the rotator (30) comprising a stator (34) configured to be mounted to a distal end of a crane (12) of a harvester (10) and a rotor (36) configured to be connected to a frame (74) of the head (20) and to rotate around an axis (38) with respect to the stator (30), and a sensor (60) configured to detect the angle of the rotor (36) around the axis (30). The sensor (60) is mounted to an intermediate flange (60) adapted to be mounted between the rotor (36) and the frame (74) of the head (20), and the sensor (60) is configured to interact with a reference element (80) mounted on the stator (34).

## Description

The invention relates to an assembly comprising a rotator for a harvester head and a sensor configured to detect the angle of the rotor around its axis.

### Prior Art

In forestry, harvesters are used for felling and optionally further processing (delimbing, cutting) trees. These harvesters comprise a chassis on which a crane is mounted, which supports on its distal end a harvester head. Between the distal end of the crane and the head, a rotator is provided, allowing the head to be rotated around a vertical axis. The rotator comprises an actuator for performing the rotation, usually hydraulically driven. Such rotators have an upper part forming a stator mounted to the crane and a lower part forming a rotor on which the harvester head is mounted, with the hydraulic actuation assembly provided in a section in which rotor and stator overlap in the axial (vertical) direction, as shown for example in EP 3 393 960 B1 and US 4 989 652 A, while in other rotators, the stator extends over the entire length of the rotor and the rotor is surrounding the stator (brochure "Harvester and grapple rotators" of Black Bruin Inc., print remark radial-piston-rotators-en-rev-a).

For an automatic control of the head, a sensor can be used to sense the rotational angle of the head with respect to the distal end of the crane, i.e. the rotation angle provided by the rotator. The sensor is in the prior art integrated into the rotator, cf. US 11 937 554 B2.

EP 4 425 109 A1 describes a crane in a forest machine with a proximal boom rotating around a vertical axis and a sensor for the rotation angle mounted in a cap threaded from the underside into a base on which the boom is rotating, the sensor interacting with a magnet on the bottom of the rotating boom.

### Task

The integrated sensors of the rotator are in a position with very limited accessibility for maintenance or repair purposes. The task of the present invention is to avoid or at least reduce this disadvantage.

### Summary

The present invention is defined by the claims.

An assembly comprises a rotator for a harvester head, the rotator comprising a stator configured to be mounted to a distal end of a crane of a harvester and a rotor configured to be connected to a frame of the head and to rotate around an axis with respect to the stator, and a sensor configured to detect the angle of the rotor around the axis The sensor is mounted to an intermediate flange adapted to be mounted between the rotor and the frame of the head. The sensor is configured to interact with a reference element mounted on the stator.

In other words, an intermediate frame can be mounted between the frame of the head and the rotor of the rotator and carries a sensor interacting with a reference element on the stator of the rotator. Thus, the sensor and the reference can be easily and quickly accessed if needed just after disassembly of the intermediate flange, without any need to dismantle the rotator.

### Embodiment

An embodiment of the invention described in more detail below is shown in the drawings. It shows:
- Fig. 1: a side view of a forest machine in the form of a harvester,
- Fig. 2: a perspective view of a harvester head with rotator, and
- Fig. 3: a vertical section through the rotator of the harvester head of fig. 2 with a sensor flange.

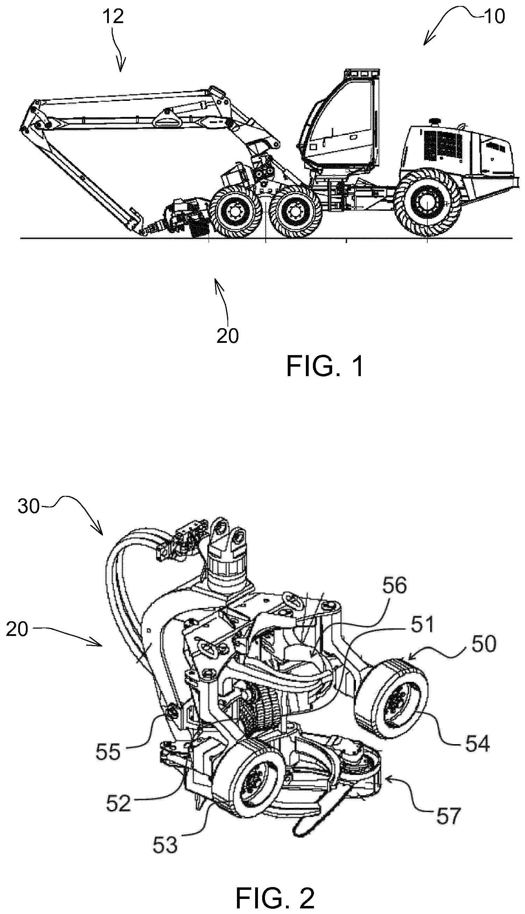

Figure 1 shows a side view of a forest machine of the type of a harvester 10 movable on a terrain. The harvester 10 comprises a crane 12 on the distal end of which a harvester head 20 is mounted.

Figure 2 shows in more detail the harvester head 20, which is capable of performing cross-cutting and felling of a tree, feeding and delimbing of the tree trunk, as well as cross-cutting of the trunk to pieces of fixed length. The head 20 of Fig. 2 comprises a frame structure 55 which can be swivelled into different positions: the vertical position, as shown in Fig. 2, and the horizontal position; as well as a delimbing device 56, a feeding device 50, and a cross-cutting device 57.

The delimbing device 56 comprises at least two delimbing blades, normally placed in parallel and on opposite sides of the tree trunk. The feeding device 50 comprises at least two feeding members, normally placed in parallel and on opposite sides of the tree trunk. In the example of Fig. 2, the feeding device 50 comprises four feeding members which comprise two feed wheels 53, 54 and two feed rollers 51, 52 placed in the frame structure 55 and mechanically connected to each other.

Between the upper end of head 20, when the latter is in the position shown in fig. 2, and the distal end of the crane 12, a rotator 30 is mounted, which allows to rotate head 20 with respect to the distal end of crane 12 around an axis, which is in the tree felling position of fig. 2 vertical and in the transport position of fig. 1 approximately horizontal. In the following description, it is assumed that the rotation axis 38 of rotator 30 is vertical and thus directional references, as axial or radial, are made with reference to a vertical rotation axis of rotator 30.

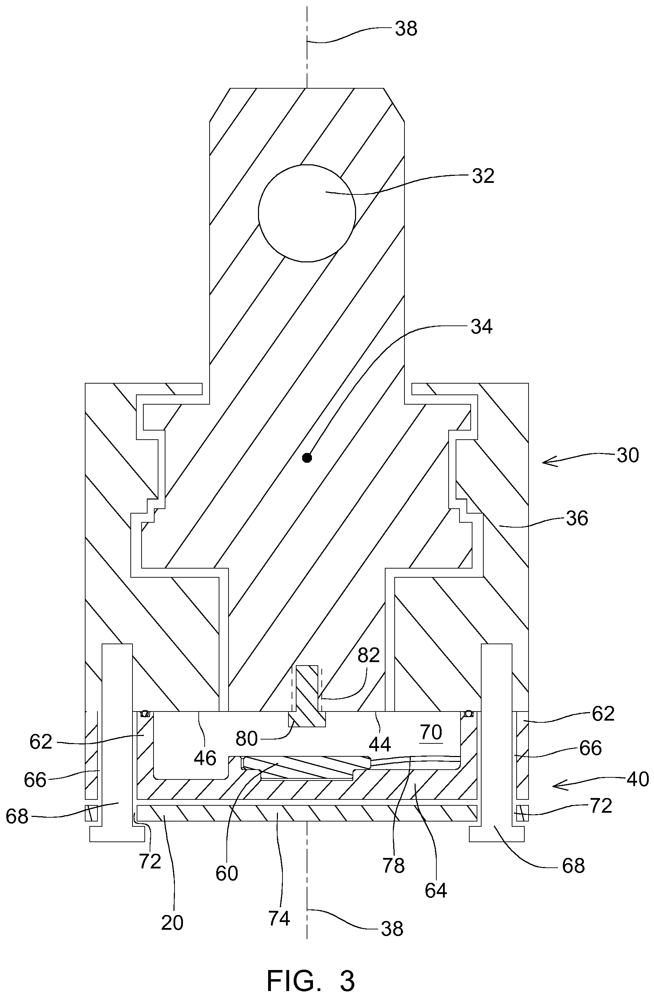

Reference is now made to fig. 3, in which the rotator 30 and a sensor 60 are shown in a vertical section through rotator 30. The rotator 30 has an upper interface 32 for mounting the rotator 30 to the crane 12.

Rotator 30 comprises a stator 34 rigidly connected to or made unitary with the interface 32. Stator 34 thus does not rotate with respect to interface 32. Rotator 30 further has a rotor 36 surrounding the lower part of stator 34 circumferentially. Between stator 34 and rotor 36, one or more actuators (not shown) are provided for rotating rotor 36 around an axis 38 that is coincident with the longitudinal symmetry axis of rotator 30 and extends vertical in fig. 2 and 3. These actuators are generally driven hydraulically by radial piston motors, not shown in detail herein since known in the art.

The rotator 30 per se, without the intermediate flange 40 and sensor 60 as described below, is available for example from Black Bruin Oy, Jyväskylä, Finland. In the prior art, the frame of the head 20 is directly mounted to the bottom lower portion 46 of rotor 36. It should be noted that the lower end 44 of stator 34 is not covered by the lower portion 46 of rotor 36, such that the - thus free - lower end 44 of stator 34 is freely accessible from underneath, as can be seen in fig. 3.

As also indicated in fig. 3, on bottom 46 of rotor 36, an intermediate flange 40 is mounted. On the underside of intermediate flange 40, the frame 74 of head 20 is rigidly mounted by bolts 68 extending through openings 70 in frame 74 of head 20 and openings 66 within a wall 62 of flange 40. Bolts 68 thus mount frame 74 and flange 40 to rotor 36 of rotator 30.

Flange 40, as shown in fig. 3, has a wall 62 extending circumferentially around a bottom 64, and thus a hollow interior 70 above bottom 64, surrounded by the wall 62. The openings 66, distributed around the circumference of flange 40, extend vertically through bottom 64 and wall 62. In mounted state, the bolts 68 are introduced into the openings 70 in frame 74 and the openings 66 in flange 40, having threads screwed into corresponding threaded bores in rotor 36 of the rotator 30.

On the bottom 64, within interior 68 of flange 40, a rotation sensor 60 is mounted. The sensor 60 is fixed by bolts on the bottom 64, be it directly or via an intermediate plate bolted to bottom 64 with the sensor 60 bolted to the intermediate plate. A cable 78 is routed from sensor 60 through the wall 62 (or bottom 64) towards head 20. Cable 78 is connected to an electronic control unit on head 20 which communicates, via electric lines provided between head 20 and harvester 10, with a control unit on the harvester 10. These electric lines can be routed through rotator 30 by rotary feedthroughs, like hydraulic lines for the head 20.

Sensor 60 is, in the shown embodiment, a magnetic sensor interacting with a reference element 80, which contains a magnet providing a magnetic field sensed by sensor 60. The reference element 80 is connected to the stator 34 of the rotator 30. Both the reference element 80 and the sensor 60 are aligned with the rotation axis 38 of rotator 30. The reference element 80 has an outer thread screwed into a bore 82 at the bottom of stator 34. A sensor 60 and reference element 80 are available from Curtiss-Wright Industrial Group, Christchurch, GB, part no. NRH27C. Rotation of element 80 with respect to sensor 60 and vice versa changes the orientation of the magnetic field within (and sensed by) sensor 60. Hence, sensor 60 provides an output signal on cable 78 indicating the angle of rotor 36 with respect to stator 34. In other embodiments, sensor 60 could interact with optical markings on reference element 80.

After all, it is apparent that the intermediate flange 40 is mounted between rotor 36 and frame 74 of head 20. Sensor 60 is mounted on bottom 64 of flange 40 and interacts with reference element 80 on stator 34 and provides an output signal indicating the rotation angle of rotor 36. Sensor 60 and reference element 80 are separate from rotator 30 and can be easily accessed for service.

## Claims

1. An assembly comprising:
a rotator (30) for a harvester head (20), the rotator (30) comprising a stator (34) configured to be mounted to a distal end of a crane (12) of a harvester (10) and a rotor (36) configured to be connected to a frame (74) of the head (20) and to rotate around an axis (38) with respect to the stator (30), and
a sensor (60) configured to detect the angle of the rotor (36) around the axis (30),
**characterized in that** the sensor (60) is mounted to an intermediate flange (60) adapted to be mounted between the rotor (36) and the frame (74) of the head (20),
and that the sensor (60) is configured to interact with a reference element (80) mounted on the stator (34).

2. The assembly according to claim 1, wherein the stator (34) has a free end (44), not covered by the rotor (36), on which the reference element (80) is mounted adjacent the sensor (60).

3. The assembly according to claim 1 or 2, wherein the reference element (80) and the sensor (60) are located on the axis (38).

4. The assembly according to one of claims 1 to 3, wherein the flange (60) has openings (66) for receiving bolts (68) mounting the frame (74) to the rotor (36).

5. The assembly according to one of claims 1 to 4, wherein the intermediate flange (60) comprises a bottom (64) and a wall (62) surrounding the bottom (64) and a hollow interior (62) in which the sensor (60) is located.

6. The assembly according to claim 5, wherein the sensor (60) is mounted to the bottom (64).

7. The assembly according to one of claims 1 to 6, wherein the reference element (80) contains at least one magnet, and the sensor (60) is configured to sense the magnetic field of the magnet.

8. A harvester (10) with a crane (12), a harvester head (20) and an assembly according to one of the preceding claims between the distal end of the crane (12) and the head (20).

9. The harvester (10) according to claim 8 when appended to claim 5, wherein a cable (78) is routed from the sensor (60) through the wall (62) or bottom (64) towards head (20) and connected to an electronic control unit on head (20) which communicates, via electric lines provided between head (20) and harvester (10), with a control unit on the harvester (10).

## Amended claims

### Amended claims in accordance with Rule 137(2) EPC.

1. An assembly comprising:
a rotator (30) for a harvester head (20), the rotator (30) comprising a stator (34) and a rotor (36), wherein the stator (34) is connected to an interface (32) configured to be mounted to a distal end of a crane (12) of a harvester (10), the rotor (36) has a bottom lower portion (46) configured to be connected to a frame (74) of the head (20), the rotor (36) is configured to rotate around an axis (38) coincident with a longitudinal symmetry axis of the rotator (30) with respect to the stator (34) by means of one or more actuators, the rotor (36) surrounds a lower part of the stator (34) circumferentially and the stator (34) has a free lower end (44) not covered by the bottom lower portion (46) of the rotor (36), and
an intermediate flange (40) mounted between the bottom lower portion (46) of the rotor (36) and the frame (74) of the head (20), wherein a sensor (60) configured to detect the angle of the rotor (36) around the axis (30) is mounted to the intermediate flange (40) and configured to interact with a reference element (80) mounted on the free end (44) of the stator (34) adjacent the sensor (60), wherein the reference element (80) and the sensor (60) are located on the axis (38).

2. The assembly according to claim 1, wherein the flange (60) has openings (66) for receiving bolts (68) mounting the frame (74) to the rotor (36).

3. The assembly according to claim 1 or 2, wherein the intermediate flange (60) comprises a bottom (64) and a wall (62) surrounding the bottom (64) and a hollow interior (62) in which the sensor (60) is located.

4. The assembly according to claim 3, wherein the sensor (60) is mounted to the bottom (64).

5. The assembly according to one of claims 1 to 4, wherein the reference element (80) contains at least one magnet, and the sensor (60) is configured to sense the magnetic field of the magnet.

6. A harvester (10) with a crane (12), a harvester head (20) and an assembly according to one of the preceding claims between the distal end of the crane (12) and the head (20).

7. The harvester (10) according to claim 6, when appended to claim 3, wherein a cable (78) is routed from the sensor (60) through the wall (62) or bottom (64) towards head (20) and connected to an electronic control unit on head (20) which communicates, via electric lines provided between head (20) and harvester (10), with a control unit on the harvester (10).
